# EUROPÄISCHE PATENTSCHRIFT

(11) **EP 1 535 765 B1**
(45) Veröffentlichungstag und Bekanntmachung des Hinweises auf die Patenterteilung: **19.04.2006**
(21) Anmeldenummer: 04022263.0
(22) Anmeldetag: 18.09.2004
(51) Int. Cl.: B60D 1/54

(54) **Anhängerkupplung**
Trailer hitch
Attelage pour véhicules

(30) Priorität: 27.11.2003 DE 10355490
(43) Veröffentlichungstag der Anmeldung: 01.06.2005
(73) Patentinhaber: Westfalia-Automotive GmbH & Co. KG, 33378 Rheda-Wiedenbrück (DE)
(72) Erfinder: Abels, Frank O., 29633 Munster (DE); von Alm, Günter, 29614 Soltau (DE)
(74) Vertreter: Reimold, Otto

(56) Entgegenhaltungen:
- EP-A- 1 153 770
- EP-A- 1 488 943

## Beschreibung

Die Erfindung betrifft eine Anhängerkupplung für Kraftfahrzeuge, insbesondere Personenkraftwagen, mit einem Kupplungsarm, der einenends einen Kupplungskopf zum lösbaren Befestigen eines Anhängers trägt und andernends mit einem Lagerkopf fest verbunden ist, der ein Drehachsglied aufweist, das in einem Drehlager verdrehbar gelagert ist, wobei der Kupplungsarm mittels einer Antriebseinrichtung zwischen einer im am Fahrzeug montierten Zustand nach hinten gerichteten Gebrauchsstellung und einer zur Seite geschwenkten und mit Bezug auf die Gebrauchsstellung weiter nach oben bewegten Nichtgebrauchsstellung verstellbar ist.

Feststehende Anhängerkupplungen, deren Kupplungsarm den rückseitigen Stoßfänger des Kraftfahrzeugs untergreift und nach hinten hin vorsteht, beeinträchtigen den optischen Eindruck. Daher scheuen manche Fahrzeugbesitzer den Anbau einer solchen Kupplung und verzichten somit auf die Möglichkeit, einen Anhänger an ihr Fahrzeug ankuppeln zu können.

Dieses Problem wird durch Anhängerkupplungen der eingangs genannten Art - wie sie beispielsweise aus der DE 100 23 640 C2 bekannt sind - gelöst, bei denen der Kupplungsarm, wird die Anhängerkupplung nicht benötigt, in die Nichtgebrauchsstellung verstellt wird, so dass er dem Blick eines Betrachters entzogen ist. Das Zurückbewegen in die Gebrauchsstellung erfolgt in umgekehrter Richtung.

Die Betätigung der Antriebseinrichtung erfolgt regelmäßig motorisch. Prinzipiell wäre jedoch auch eine Handbetätigung möglich.

Der vorliegenden Erfindung liegt die Aufgabe zugrunde, eine Anhängerkupplung der oben genannten Art zu schaffen, die einen einfachen Aufbau aufweist und möglichst billig in der Herstellung ist. Letzteres ist besonders von Bedeutung, da es sich bei Kraftfahrzeugen um einen Massenmarkt handelt.

Diese Aufgabe wird erfindungsgemäß dadurch gelöst, dass die Antriebseinrichtung über das Drehlager am Drehachsglied angreift, dass der in einem Kupplungsgehäuse gelagerte und geführte Lagerkopf ein außerhalb des Drehlagers angeordnetes Passstück aufweist, dem eine am Kupplungsgehäuse feststehend angeordnete Passstückaufnahme zugeordnet ist, in die das Passstück in der Gebrauchsstellung mittels der Antriebseinrichtung gedrückt wird, so dass das Passstück unverdrehbar festgespannt ist, und aus der das Passstück mittels der Antriebseinrichtung herausziehbar ist, und dass im Bewegungsweg des Lagerkopfes eine gehäusefeste Anschlageinrichtung und am Lagerkopf eine Gegenanschlageinrichtung angeordnet ist, derart, dass der Lagerkopf bei seinem Herausziehen und entgegengesetzten Einschieben in die Passstückaufnahme mit seiner Gegenanschlageinrichtung gegen die Anschlageinrichtung stößt und um die in beiden Richtungen eine zur Achslinie des Drehachsgliedes parallele Kippachse bildende Anschlageinrichtung kippt, so dass sich das Drehachsglied im Drehlager verdreht und der Kupplungsarm aus seiner Gebrauchsstellung zur Seite geschwenkt oder umgekehrt von der Seite her in die Gebrauchsstellung geschwenkt wird.

Ausgehend von der Gebrauchsstellung schließt sich an das Schwenken zur Seite hin noch ein nach oben Bewegen des Kupplungsarms in die Nichtgebrauchsstellung an, wie bereits im Oberbegriff des Anspruchs 1 erwähnt ist. Dieses Bewegen des Kupplungsarms nach oben kann, wie den Unteransprüchen zu entnehmen ist, auf verschiedene Weise erfolgen.

Die Antriebseinrichtung kann linear arbeiten. Dabei wird die lineare Antriebsbewegung mittels der gehäusefesten Anschlageinrichtung und der Gegenanschlageinrichtung am Lagerkopf in eine Kippbewegung des Lagerkopfes und somit in die Schwenkbewegung des Kupplungsarms umgesetzt. Dies lässt sich mit einer teilearmen Anordnung und einfachen Einzelteilen verwirklichen.

Ferner sind keine hohen Fertigungsgenauigkeiten erforderlich. Dies gilt auch für die Drehlagerung des Drehachsgliedes im Drehlagerteil.

In der Gebrauchsstellung wird das Passstück des Lagerkopfes durch die Antriebseinrichtung fest in die Formteilaufnahme gedrückt, so dass man ohne Verriegelungseinrichtungen oder dergleichen eine stabile Gebrauchsstellung erhält.

Das Kupplungsgehäuse verläuft im am Fahrzeug montierten Zustand zweckmäßigerweise im Wesentlichen in einer quer zur Fahrtrichtung stehenden Querebene. Dabei kann das Kupplungsgehäuse in der Querebene geneigt zur Horizontalen verlaufen, wobei die Passstückaufnahme am unteren Endbereich des Kupplungsgehäuses angeordnet ist. Dies ist insbesondere für eine Ausführungsform der erfindungsgemäßen Anhängerkupplung erforderlich, bei der der Lagerkopf bei zur Seite geschwenktem Kupplungsarm mittels der Antriebseinrichtung längs des Kupplungsgehäuses bewegbar ist, wobei der Lagerkopf und mit diesem der Kupplungsarm in der Nichtgebrauchsstellung nach oben bewegt ist. Ausgehend von der Gebrauchsstellung wird der Kupplungsarm also zunächst zur Seite geschwenkt, so dass er vor den Stoßfänger gelangt, wonach er schräg nach oben geführt und somit dem Blick eines Betrachters entzogen wird.

Bei einer zweiten Ausführungsform, die insbesondere für Kraftfahrzeuge wie Geländewagen mit einem verhältnismäßig weit hoch über den Erdboden angeordneten Stoßfänger gedacht ist, ist dagegen vorgesehen, dass im Bewegungsweg des Lagerkopfes von der.Passstückaufnahme aus gesehen jenseits der den Lagerkopf um eine zur Achslinie des Drehachsgliedes parallele Kippachse kippenden ersten Anschlageinrichtung eine zweite gehäusefeste Anschlageinrichtung angeordnet ist, deren Abstand von der ersten Anschlageinrichtung mindestens so groß ist, dass der Lagerkopf zwischen die beiden Anschlageinrichtung passt, wobei der zweiten Anschlageinrichtung eine zweite Gegenanschlageinrichtung am Lagerkopf zugeordnet ist, derart, dass die zweite Anschlageinrichtung eine quer zur Achslinie des Drehachsgliedes verlaufende zweite Kippachse bildet, so dass der beim Verschwenken des Kupplungsarms aus der Gebrauchsstellung zur Seite hin um die erste Anschlageinrichtung gekippte Lagerkopf bei weiterem Bewegen mittels der Antriebseinrichtung in Richtung von der Passstückaufnahme weg mit seinem zweiten Gegenanschlageinrichtung an der zweiten Anschlageinrichtung anliegt und unter Mitnahme des Kupplungsarms in die Nichtgebrauchsstellung kippt. In diesem Falle wird der wie eingangs geschildert zur Seite geschwenkte Kupplungsarm anschließend nach oben in die Nichtgebrauchsstellung verschwenkt.

Für alle diese Bewegungsvorgänge ist bei beiden Ausführungsformen jeweils nur eine einzige Antriebseinrichtung, zweckmäßigerweise eine lineare Stellantriebseinrichtung, erforderlich, die motorisch angetrieben wird, prinzipiell jedoch auch von Hand betätigt werden kann.

Weitere zweckmäßige Ausgestaltungen der Erfindung sind in den Unteransprüchen angegeben.

Nachstehend werden Ausführungsbeispiele der Erfindung anhand der Zeichnung erläutert. Es zeigen:
- Figur 1: ein erstes Ausführungsbeispiel der erfindungsgemäßen Anhängerkupplung im am Kraftfahrzeug montierten Zustand in schematischer Rückansicht, wobei der Stoßfänger abgeschnitten und im Bereich der Anhängerkupplung aufgebrochen gezeichnet und der Kupplungsarm sowohl in seiner Gebrauchsstellung als auch in seiner Nichtgebrauchsstellung dargestellt ist,
- Figuren 2-5: jeweils die Anhängerkupplung nach Figur 1 in schematischer Schrägansicht in verschiedenen Positionen des Kupplungsarms, wobei aus Figur 2 die Gebrauchsstellung, aus den Figuren 3 und 4 Zwischenpositionen und aus Figur 5 die Nichtgebrauchsstellung hervorgeht und in Figur 2 der ansonsten nicht eingezeichnete Antriebsmotor strichpunktiert angedeutet ist,
- Figur 6: den Kupplungsarm zusammen mit der Antriebseinrichtung (ohne Motor) in gesonderter Darstellung in Schrägansicht,
- Figur 7: die Anordnung nach Figur 6 in explodierter Darstellungsweise,
- Figuren 8a,b bis 13a,b: die gleiche Anhängerkupplung in aufeinanderfolgenden Positionen beim Verstellen aus der Gebrauchsstellung in die Nichtgebrauchsstellung, wobei die jeweils mit "a" angegebene Figur die Kupplung in Draufsicht gemäß Pfeil I und die jeweils mit "b" angegebene Figur die zugehörige Unteransicht gemäß Pfeil II in Figur 1 wiedergibt,
- Figuren 14 bis 17: die gleiche Anhängerkupplung in den Figuren 2 bis 5 entsprechenden Positionen in Rückansicht, wobei außerdem ein fahrzeugfest zu montierender Querträger gezeigt ist, an dem die Kupplung befestigt ist,
- Figur 18: die gleiche Anhängerkupplung mit einer etwa der Figur 10 entsprechenden Stellung des Kupplungsarms in Schrägansicht von unten her gesehen,
- Figur 19: die gleiche Kupplung in vergrößerter Teildarstellung in den Figuren 8a bis 13a entsprechender Draufsicht,
- Figur 20: eine zweite Ausführungsform der erfindungsgemäßen Anhängerkupplung im am Kraftfahrzeug montierten Zustand in der Figur 1 entsprechender Rückansicht, wobei sowohl die Gebrauchsstellung als auch die Nichtgebrauchsstellung dargestellt sind,
- Figuren 21 bis 24: die Kupplung nach Figur 20 in Draufsicht (die Antriebseinrichtung wurde weggelassen) in verschiedenen Positionen des Kupplungsarms beim Verschwenken des Kupplungsarms aus der Gebrauchsstellung in die zur Seite hin geschwenkte Stellung,
- Figuren 25 und 26: die Kupplung nach den Figuren 20 bis 24 in der Figur 20 entsprechender Rückansicht, wobei der Kupplungsarm in Figur 25 die aus der Gebrauchsstellung zur Seite hin geschwenkte Stellung (siehe auch Figur 24) und in Figur 26 die aus der Zwischenstellung nach Figur 25 durch Kippen nach oben erreichte Nichtgebrauchsstellung einnimmt,
- Figur 27: die Kupplung nach den Figuren 20 bis 26 in der Figur 18 entsprechender Schrägansicht von unten mit einer etwa der Figur 23 entsprechenden Position des Kupplungsarms und
- Figur 28: die Anordnung nach Figur 27, wobei der Kupplungsarm in die Nichtgebrauchsstellung hochgeschwenkt ist.

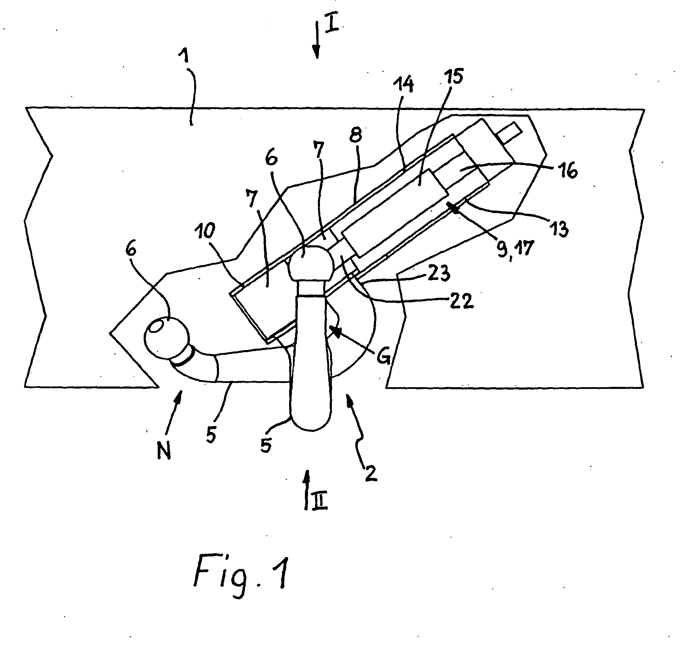

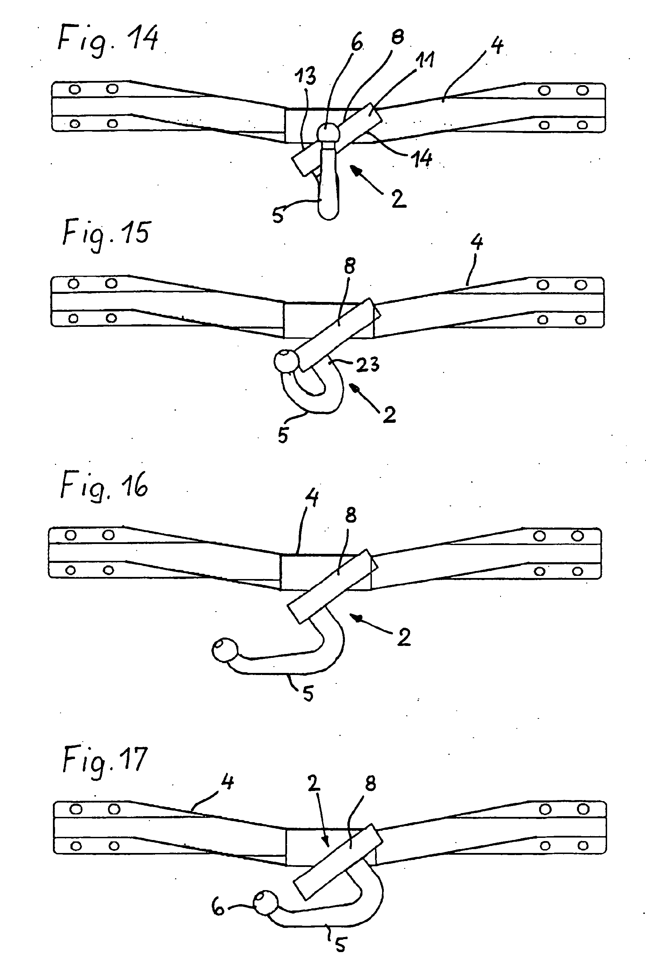

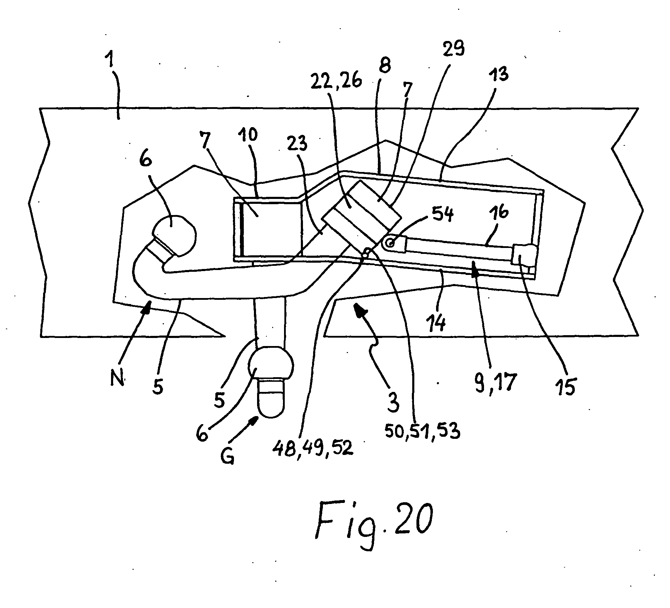

In den Figuren 1 und 20 ist die einen hinteren Stoßfänger bildende Heckschürze 1 eines Personenkraftwagens angedeutet, in deren Bereich eine Anhängerkupplung 2; 3 angeordnet ist. Dabei ist die Anhängerkupplung 2; 3 vor (mit "vorne" ist die Richtung zum vorderen Fahrzeugende hin gemeint) der Heckschürze 1 fest mit dem Fahrzeugchassis verbunden, beispielsweise mit einem Querträger 4, der nur in den Figuren 14 bis 17 gezeigt ist.

Die jeweilige Anhängerkupplung 2; 3 weist, wie bei Anhängerkupplungen üblich, einen Kupplungsarm 5 auf, der eine an die jeweiligen Platzverhältnisse und den Fahrzeugtyp angepasste gebogene Gestalt aufweist. Der Kupplungsarm 5 trägt einenends, an seinem im montierten Zustand freien Ende, einen in der Gebrauchsstellung hochstehend angeordneten Kupplungskopf 6 kugeliger Gestalt, an dem ein Anhänger lösbar befestigt werden kann.

An seinem entgegengesetzten Ende ist der Kupplungsarm 5 mit einem Lagerkopf 7 fest verbunden, der in einem fahrzeugfest zu montierenden und dabei im Falle der Ausführungsbeispiele an dem Querträger 4 angebrachten Kupplungsgehäuse 8 gelagert und geführt ist.

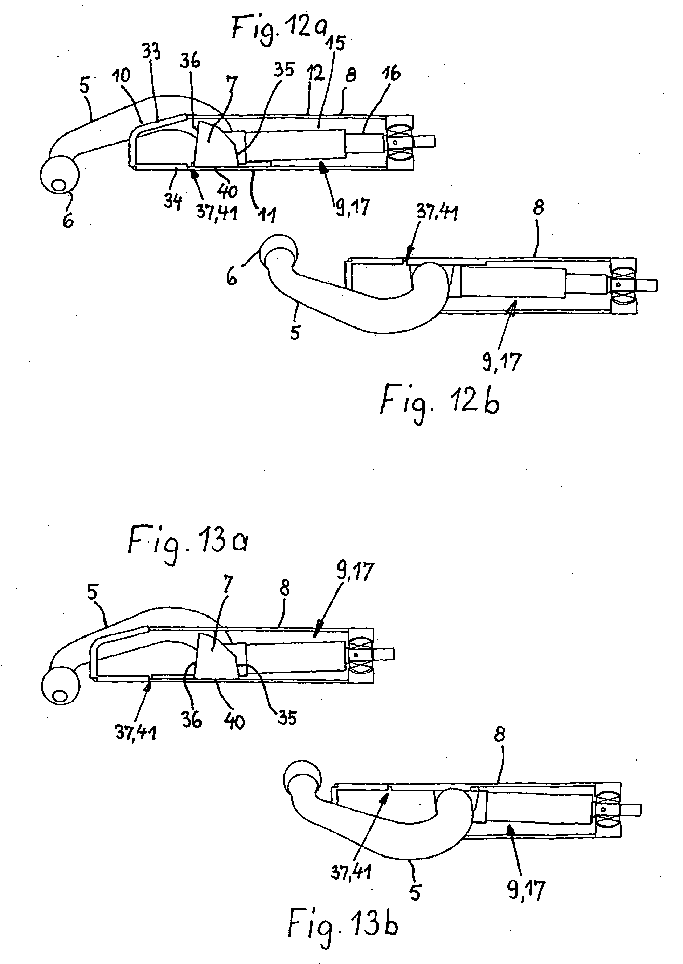

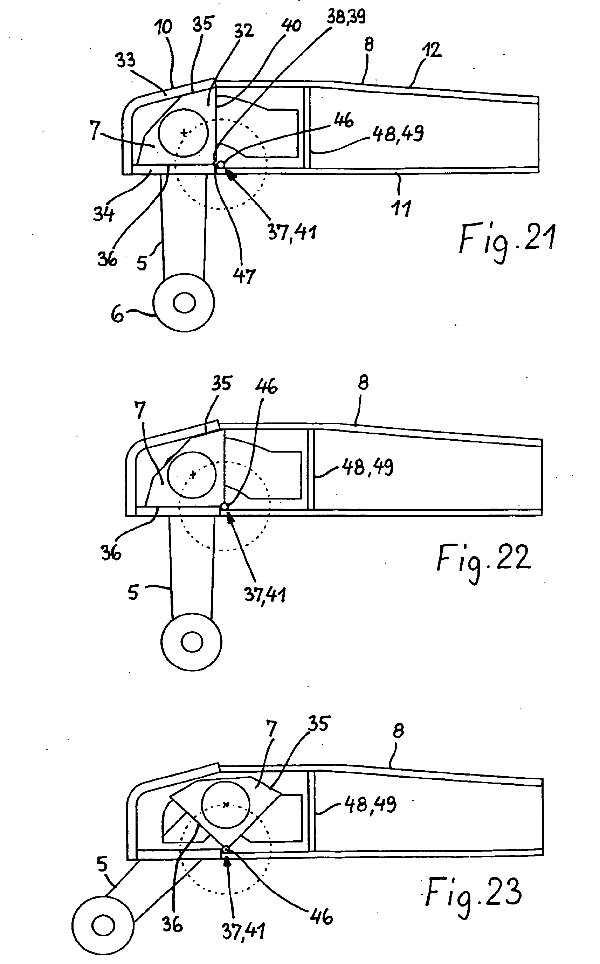

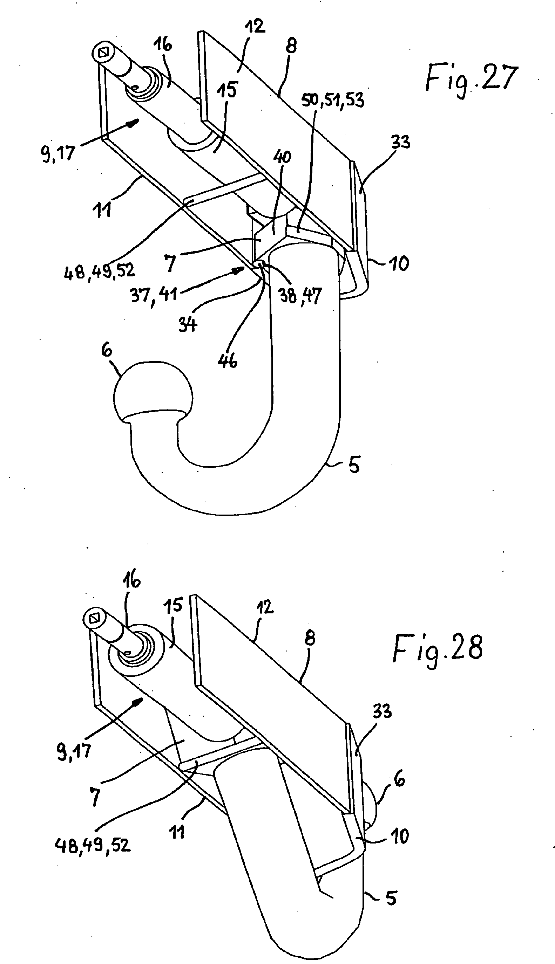

Der Kupplungsarm 5 ist mittels einer Antriebseinrichtung 9 (diese wurde in den Figuren 21 bis 26 weggelassen) zwischen einer im am Fahrzeug montierten Zustand nach hinten gerichteten Gebrauchsstellung (siehe Pfeil G in den Figuren 1 und 20 sowie die Figuren 2, 8, 14 und 21) und einer zur Seite geschwenkten und mit Bezug auf die Gebrauchsstellung weiter nach oben bewegten Nichtgebrauchsstellung (siehe Pfeil N in den Figuren 1 und 20 sowie die Figuren 5, 13, 17, 26 und 28) hin und her verstellbar. In der Nichtgebrauchsstellung befindet sich der Kupplungsarm 5 vor der Heckschürze 1 oder einem sonstigen Karosserieteil, so dass er nach hinten hin verdeckt angeordnet ist.

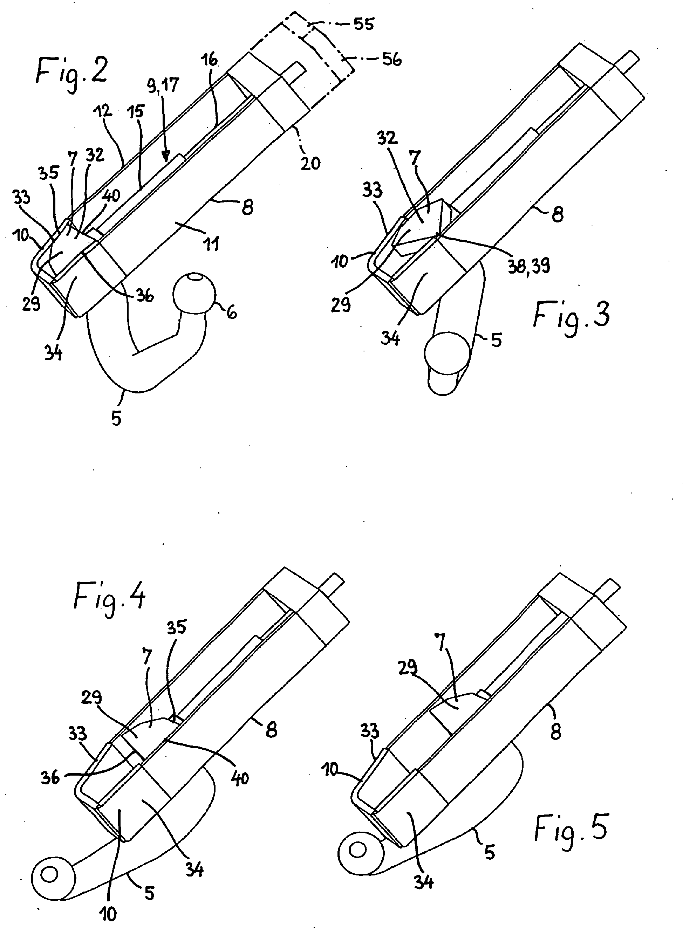

Ausgehend von der nach hinten gerichteten Gebrauchsstellung wird der Kupplungsarm zunächst so weit zur Seite geschwenkt, dass er etwa in einer quer zur Fahrtrichtung stehenden Querebene verläuft. Es versteht sich, dass der Schwenkweg, falls erforderlich, auch größer oder kleiner als 90° sein kann. Aus dieser zur Seite geschwenkten Zwischenstellung (Figuren 4, 12, 16, 24 und 25) wird der Kupplungsarm 5 dann nach oben in die Nichtgebrauchsstellung bewegt.

Das Verschwenken des Kupplungsarms 5 aus der Gebrauchsstellung in die genannte Zwischenstellung und umgekehrt erfolgt bei beiden Kupplungen 2 und 3 nach dem gleichen Prinzip. Das Bewegen des Kupplungsarms 5 aus der zur Seite geschwenkten Zwischenstellung nach oben und umgekehrt erfolgt dagegen unterschiedlich.

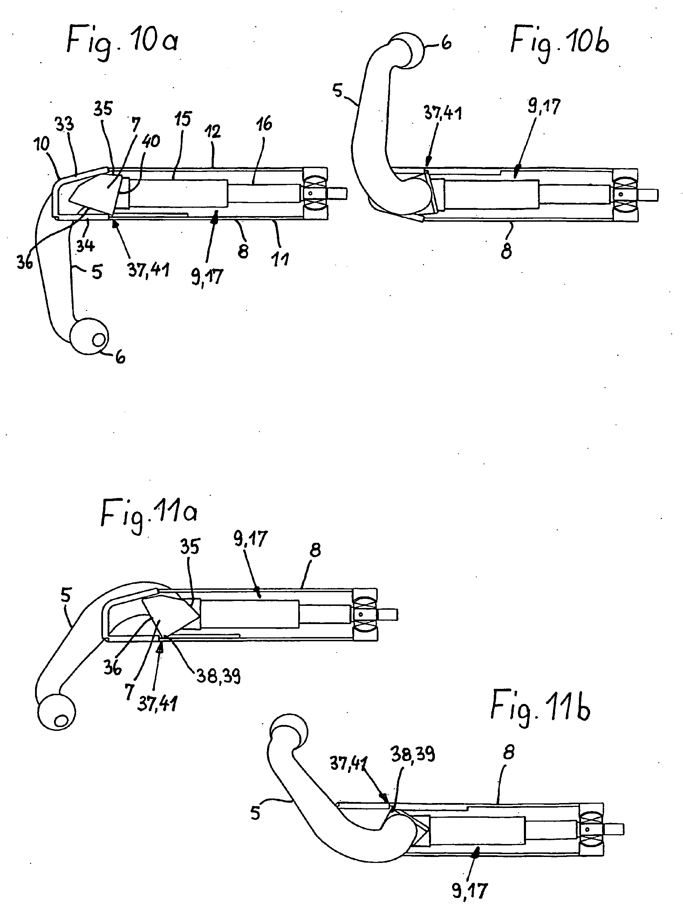

Das Kupplungsgehäuse 8 weist eine längliche Gestalt auf. Bei beiden Ausführungsbeispielen verläuft das Kupplungsgehäuse 8 im am Fahrzeug montierten Zustand in einer quer zur Fahrtrichtung stehenden Querebene. Dabei verläuft das Kupplungsgehäuse 8 im Falle der Figuren 1 bis 19 geneigt zur Horizontalen, und zwar so, dass eine noch zu beschreibende Passstückaufnahme 10 am unteren Endbereich des Kupplungsgehäuses 8 angeordnet ist. Bei der Kupplung 3 der Figuren 20 bis 28 ist das Kupplungsgehäuse 8 etwa in horizontaler Lage montiert.

Das Kupplungsgehäuse 8 weist eine im montierten Zustand hinten angeordnete Rückwand 11, eine vorne angeordnete Vorderwand 12, eine oben angeordnete Oberwand 13 und eine unten angeordnete Unterwand 14 auf, die in den Figuren teilweise weggelassen worden sind, um die im Kupplungsgehäuse 8 angeordneten Teile sichtbar zu machen. An einem seiner beiden Endbereiche ist das Kupplungsgehäuse 8 durch ein die Passstückaufnahme 10 bildendes Teil abgeschlossen.

Die Antriebseinrichtung 9 kann prinzipiell manuell, bevorzugt jedoch motorisch angetrieben werden. Dabei handelt es sich zweckmäßigerweise um eine lineare Stellantriebseinrichtung, wobei vorliegend ein sich etwa in Längsrichtung des Kupplungsgehäuses 8 erstreckender Spindeltrieb 17, bestehend aus einer Gewindehülse 15 und einer mit dieser im Gewindeeingriff stehender Gewindespindel 16. Anstelle des Spindeltriebs 17 könnte auch beispielsweise ein hydraulischer oder pneumatischer oder ein sonstiger Stellantrieb verwendet werden.

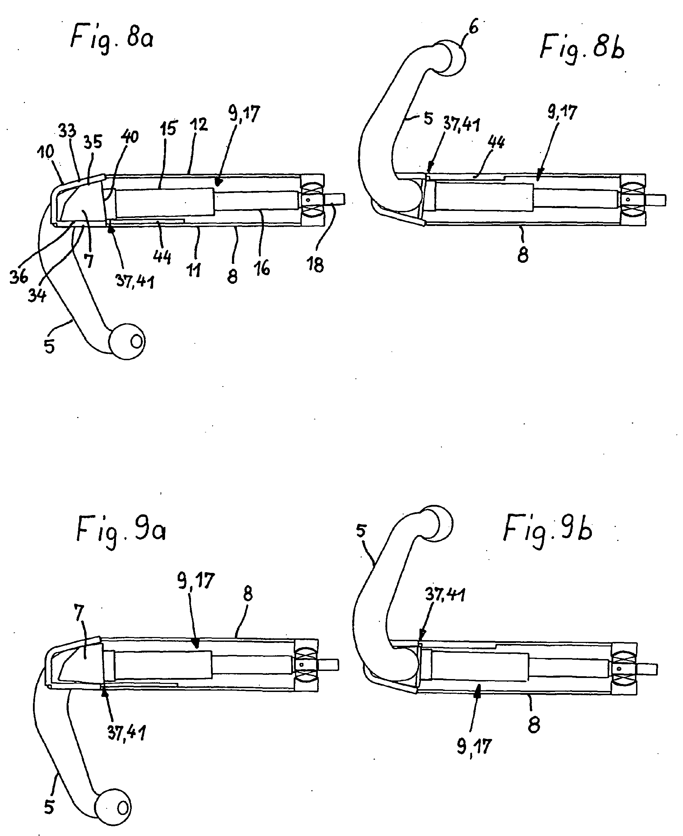

Der Spindeltrieb 17 ist mit seiner Gewindespindel oder seiner Gewindehülse am der Passstückaufnahme 10 entgegengesetzten Endbereich des Kupplungsgehäuses 8 verdrehbar und zweckmäßigerweise gelenkig gelagert, wie aus den Figuren 8 bis 13 hervorgeht, in denen ein Fortsatz 18 der Gewindespindel 16 einen das Kupplungsgehäuse 8 verschließenden Abschlussdeckel 19 verdrehbar durchgreift und dabei gelenkig gelagert ist. In axialer Richtung ist der Fortsatz 18 feststehend angeordnet.

Der Antriebsmotor 20, der nur in Figur 2 strichpunktiert angedeutet ist, kann an dem Abschlussdeckel 19 sitzen. Im dargestellten Falle treibt er den Gewindespindel-Fortsatz 18 an, so dass die rotierende Gewindespindel 16 die Gewindehülse 15 in Längsrichtung des Kupplungsgehäuses 8 je nach dem Drehsinn in Richtung zur Formteilaufnahme 10 hin oder von dieser weg bewegt.

Es versteht sich, dass der Spindeltrieb auch umgekehrt mit seiner Gewindehülse am Abschlussdeckel 19 montiert sein könnte.

Der Schalter zum In-Gang-Setzen des elektrischen Antriebsmotors 20 kann an einer beliebigen Stelle des Fahrzeugs angeordnet werden. Auch eine Funkbetätigung des Antriebsmotors wäre möglich.

Der feststehend an den Kupplungsarm 5 angesetzte Lagerkopf 7 weist ein Drehachsglied 21 kreiszylindrischer Gestalt auf, das in einem Drehlager 22 verdrehbar gelagert ist. Das Drehachsglied 21 ist in der Gebrauchsstellung zweckmäßigerweise etwa vertikal ausgerichtet. Ferner ist das Drehachsglied 21 zweckmäßigerweise im Wesentlichen parallelachsig zum dem Lagerkopf 7 zugewandten Abschnitt 23 des Kupplungsarms 5 in Verlängerung von diesem angeordnet.

Die Antriebseinrichtung 9 greift über das Drehlager 22 am Drehachsglied 21 an. Bei den Ausführungsbeispielen ist das Drehlager 22 zeiteilig ausgebildet. Dabei ist an die Antriebseinrichtung 9, in den dargestellten Fällen an das zugewandte Ende des Spindeltriebs 17, ein Lagerelement 24 mit einer kreisbogenförmigen Ausnehmung 25 angesetzt, die das Drehachsglied 21 ein Stück weit übergreift. Von der entgegengesetzten Seite her umgreift ein U-förmiges Metallbandstück 26 das Drehachsglied 21 und ist mit seinen Schenkeln 27, 28 seitlich auf das Lagerelement 24 gesteckt und mit diesem beispielsweise durch Verschweißen, Nieten oder Schrauben fest verbunden. Auf diese Weise bilden das Lagerelement 24 und das Metallbandstück 26 ein das Drehachsglied 21 lagerndes Lagerauge, in dem sich das Drehachsglied 21 verdrehen kann. Bei diesem Verdrehen schwenkt der Kupplungsarm 5 um die Achslinie des Drehachsgliedes 21.

Bei dem Ausführungsbeispiel nach den Figuren 1 bis 19 ist die Antriebseinrichtung 9 starr mit dem Drehlager 22 verbunden. Die Verbindung könnte jedoch auch gelenkig sein. Im Falle des Ausführungsbeispiels nach den Figuren 20 bis 28 ist dagegen eine gelenkige Verbindung zwischen der Antriebseinrichtung 9 und dem Drehlager 22 erforderlich, wie noch erläutert wird.

Der Lagerkopf 7 weist ferner außerhalb des Drehlagers 22 in axialer Richtung des Drehachsgliedes 21 versetzt zu diesem ein Passstück 29 auf. Bei den Ausführungsbeispielen ist das Passstück 29 zweigeteilt und dabei in zwei beiderseits des Drehachsgliedes 21 angeordnete Passstückpartien 30, 31 unterteilt. Auf diese Weise wird der Lagerkopf 7 von den beiden Passstückpartien 30, 31 und dem zwischen diesen angeordneten Drehachsglied 21 gebildet.

Dem Passstück 29 ist die bereits erwähnte Passstückaufnahme 10 zugeordnet, die feststehend am Kupplungsgehäuse 8 angeordnet ist.

In der Gebrauchsstellung wird das Passstück 29 mittels der Antriebseinrichtung 9 in die Passstückaufnahme 10 gedrückt, so dass das Passstück 29 und mit diesem der Kupplungsarm 5 unverdrehbar festgespannt ist.

Hierzu ist zweckmäßigerweise vorgesehen, dass sich die Passstückaufnahme 10 in Richtung von der Antriebseinrichtung 9 weg keilartig verjüngt und das Passstück 29 einen sich entsprechend keilartig verjüngenden Keilbereich 32 aufweist, der in der Gebrauchsstellung in der Passstückaufnahme 10 festgekeilt ist. Dabei besitzen die Passstückaufnahme 10 und der Passstück-Keilbereich 32 in der Richtung der Achslinie des Drehachsgliedes 21 entsprechend der Draufsicht (Figuren 8 bis 13, 19 und 21 bis 24) eine sich keilartig verjüngende Gestalt.

Bei der Passstückaufnahme 10 verlaufen deren vorne angeordnete Vorderseite 33 und deren hinten angeordnete Rückseite 34 keilartig geneigt zueinander. Dabei kann die Rückseite 34, wie dargestellt, in Verlängerung der Gehäuse-Rückwand 11 angeordnet sein.

Der Passstück-Keilbereich 32 bildet dementsprechend eine vordere Keilfläche 35 und eine hintere Keilfläche 36, die der Vorderseite 33 bzw. der Rückseite 34 der Passstückaufnahme zugeordnet und unter dem gleichen Keilwinkel wie diese zueinander geneigt sind.

Das Passstück 29 wird in der Gebrauchsstellung, wie bereits erwähnt, durch die Antriebseinrichtung 9 in die Passstückaufnahme 10 gedrückt. Will man den Kupplungsarm 5 in die Nichtgebrauchsstellung überführen, wird zu Beginn dieses Bewegungsablaufes das Passstück 29 mittels der Antriebseinrichtung 9 aus der Passstückaufnahme 10 gezogen, so dass die Verkeilung aufgehoben wird und zwischen der Passstückaufnahme 10 und dem Passstück 29 des Lagerkopfes 7 ein Spiel entsteht.

Im Bewegungsweg des Lagerkopfes 7 zur Antriebseinrichtung 9 hin ist nun eine gehäusefeste Anschlageinrichtung 37 angeordnet, die einer Gegenanschlageinrichtung 38 am Lagerkopf 7, zweckmäßigerweise an dessen Passstück 29, zugeordnet ist. Die der Übersichtlichkeit wegen nur in einigen der Figuren mit der Bezugsziffer 38 angegebene Gegenanschlageinrichtung wird zweckmäßigerweise von einem Passstück-Kantenbereich 39 gebildet. Bei den Ausführungsbeispielen handelt es sich um die die hintere Keilfläche 36 in der Gebrauchsstellung zur Antriebseinrichtung 9 hin begrenzende Kante des Passstücks 29, an die sich unter Bildung eines Ecks eine die vordere Keilfläche 35 und die hintere Keilfläche 36 verbindende Querfläche 40 des Passstücks 29 anschließt.

Die Gegenanschlageinrichtung 38 befindet sich somit am Umfang des Passstücks 29. Dabei ist sie in der Gebrauchsstellung der von der Gehäuse-Rückwand 11 und der Rückseite 34 der Passstückaufnahme 10 gebildeten, durchgehend gleich gerichteten Wand des Kupplungsgehäuses benachbart, an der die Anschlageinrichtung 37 angeordnet ist.

Der Lagerkopf 7 stößt bei seinem Herausziehen aus der Passstückaufnahme 10 mit seiner Gegenanschlageinrichtung 38 gegen die Anschlageinrichtung 37 und kippt um die somit eine Kippachse 41 bildende Anschlageinrichtung 37.

Diese Kippachse 41 verläuft parallel zur Achslinie des Drehachsgliedes 21, so dass sich das Drehachsglied 21 in dem Drehlager 22 verdreht und der Kupplungsarm 5 somit zur Seite in die Zwischenstellung gemäß den Figuren 4, 12, 16 und 24 verschwenkt wird.

Dieser Kippvorgang geht aus den Figuren 8 bis 12 bzw. 21 bis 24 anschaulich hervor, die den Kupplungsarm 5 in aufeinander folgenden Schwenkpositionen zeigen.

Es versteht sich, dass das Passstück 29 so gestaltet ist, dass es sich nach dem Lösen der Verkeilung im Kupplungsgehäuse verdrehen kann.

Nach seinem Verkippen um die Kippachse 40 liegt das Passstück 29 mit seiner Querfläche 40 an der Rückwand 11 des Kupplungsgehäuses 8 an. Der Winkel, den die hintere Keilfläche 36 und die Querfläche 40 des Passstücks 29 miteinander bilden, bestimmt also den Schwenkwinkel des Kupplungsarms 5 zwischen der Gebrauchsstellung und der seitlichen Zwischenstellung.

Bewegt man den Lagerkopf 7 beim Überführen des Kupplungsarms 5 aus der Nichtgebrauchsstellung in die Gebrauchsstellung in umgekehrter Richtung, stößt das Passstück 29 mit seiner Gegenanschlageinrichtung 38 von der entgegengesetzten Seite her gegen die gehäusefest Anschlageinrichtung 37, so dass der Lagerkopf 7 nunmehr in entgegengesetzter Richtung um die Kippachse 41 kippt und dann, in der Gebrauchsstellung, in der Passstückaufnahme 10 verspannt wird.

Das Passstück 29 steht in radialer Richtung über das Drehachsglied 21 vor, so dass es an seinen vorstehenden Bereichen die Keilflächen 35, 36, die Gegenanschlageinrichtung 38 und die Querfläche 40 bilden kann.

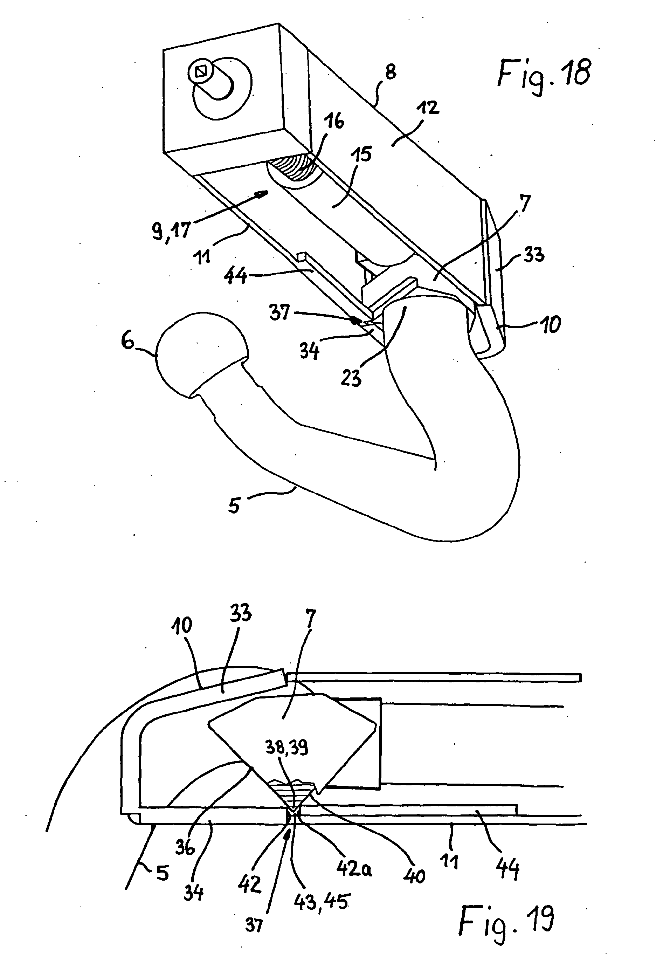

Die Anschlageinrichtung 37 kann, wie es bei dem Ausführungsbeispiel nach den Figuren 1 bis 19 der Fall ist, von den beiden Rändern 42, 42a (siehe Figur 19) einer am Kupplungsgehäuse 8 angeordneten Anschlagausnehmung 43 gebildet werden, in die die Gegenanschlageinrichtung 38, d.h. der Passstück-Kantenbereich 39, beim Verkippen eintaucht.

Beim Ausführungsbeispiel nach den Figuren 1 bis 19 ist unten an der Rückwand 11 des Kupplungsgehäuses 8 ein Führungssteg 44 zur Führung des Lagerkopfes 7 angeordnet. Zwischen dem der Passstückaufnahme 10 zugewandten Ende des Führungssteges 44 und der Rückseite 34 der Passstückaufnahme 10 befindet sich ein die Anschlagausnehmung 43 bildender Spalt 45, da die Gehäuse-Rückwand 11 dünner als die Rückseite 34 der Passstückaufnahme 10 ist. In diesen Spalt 45 kippt das Passstück 29.

Die Anschlageinrichtung 37 kann zweckmäßigerweise jedoch auch, wie es bei dem Ausführungsbeispiel nach den Figuren 20 bis 28 gezeigt ist, von einem Anschlagstift 46 oder einem Anschlagsteg gebildet werden. Der Anschlagstift 46 weist einen kreisrunden Querschnitt auf. Er erstreckt sich der Rückwand 11 des Kupplungsgehäuses 8 entlang und verläuft parallel zur Achslinie des Drehachsgliedes 21. Die zugeordnete Gegenanschlageinrichtung 38 wird von einer im Querschnitt entsprechend abgerundeten Gegenanschlagsnut 47 gebildet, die an dem Passstück-Kantenbereich 39 angeordnet ist.

Das Passstück 29 läuft bei seinem Verschieben mit seiner Gegenanschlagsnut 47 gegen den Anschlagstift 4 und kippt um diesen.

Es versteht sich, dass man bei beiden Ausführungsbeispielen die Anschlageinrichtung 37 und die Gegenanschlageinrichtung 38 entweder wie im Falle der Figuren 1 bis 19 oder wie im Falle der Figuren 20 bis 28 ausbilden kann.

Bis jetzt wurde lediglich das Verschwenken des Kupplungsarms 5 zwischen der Gebrauchsstellung und der zur Seite geschwenkten Zwischenstellung beschrieben. Dieser Vorgang ist bei beiden Ausführungsbeispielen gleich. Die beiden Ausführungsbeispiele unterscheiden sich dagegen in dem zwischen der Zwischenstellung und der Nichtgebrauchsstellung liegenden Bewegungsabschnitt.

Beim Ausführungsbeispiel nach den Figuren 1 bis 19 verläuft das Kupplungsgehäuse 8 und somit auch der Bewegungsweg des Lagerkopfes 7 von der Passstückaufnahme 10 ausgehend schräg nach oben. Man braucht daher den Lagerkopf 7, um den Kupplungsarm 5 aus der seitlichen Zwischenstellung in die Nichtgebrauchsstellung zu überführen, mittels der Antriebseinrichtung 9 nur längs des Kupplungsgehäuses 8 nach oben zu bewegen, so dass der Kupplungsarm 5 dann die Nichtgebrauchsstellung einnimmt. Umgekehrt wird der Kupplungsarm 5 bei seinem Überführen von der Nichtgebrauchsstellung in die Gebrauchsstellung zuerst nach unten in die Zwischenstellung bewegt und dann verschwenkt.

Bei dem Ausführungsbeispiel nach den Figuren 1 bis 19 bleibt der Kupplungsarm 5 in dem Bewegungsabschnitt zwischen der Zwischenstellung und der Nichtgebrauchsstellung somit gleich ausgerichtet und wird schräg nach oben bzw. unten versetzt.

Bei der Anhängerkupplung 3 nach den Figuren 20 bis 28 wird der Kupplungsarm 5 zwischen der zur Seite geschwenkten Zwischenstellung und der Nichtgebrauchsstellung dagegen nicht linear schräg nach oben bewegt sondern nach oben gekippt. Daher ist es bei diesem Ausführungsbeispiel nicht erforderlich, dass das Kupplungsgehäuse 5 zur Horizontalen geneigt ist. Es kann vielmehr etwa in der Horizontalen verlaufen, wie aus Figur 20 ersichtlich ist.

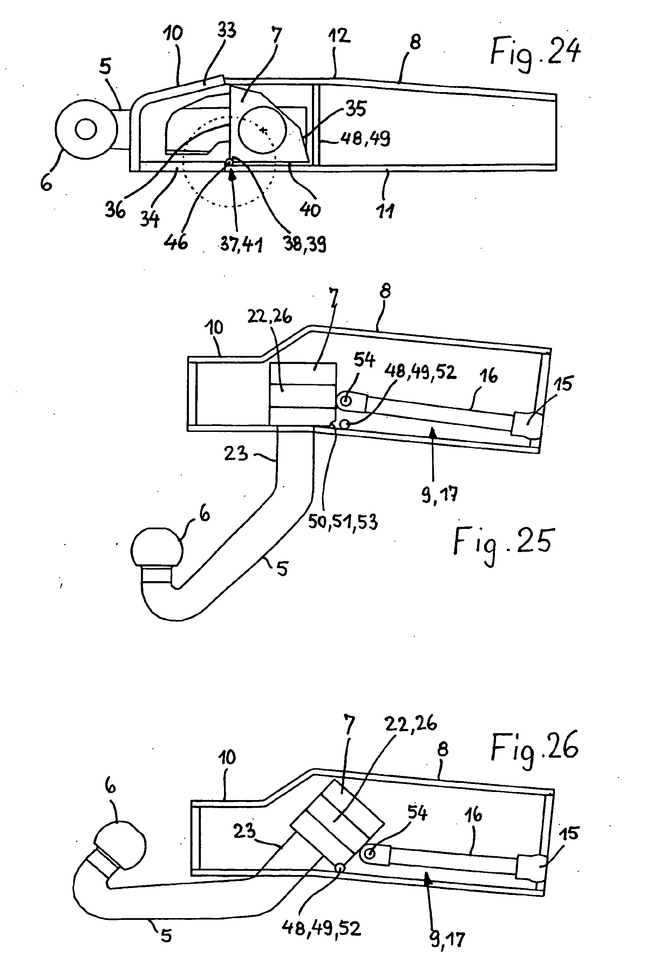

In Bewegungsrichtung des Lagerkopfes 7 in Richtung von der Passstückaufnahme 10 weg ist jenseits der den Lagerkopf 7 um die zur Achslinie des Drehachsgliedes 21 parallele Kippachse 41 kippenden ersten Anschlageinrichtung 37 eine zweite gehäusefeste Anschlageinrichtung 48 angeordnet, wobei der Abstand zwischen den beiden Anschlageinrichtung 37 und 48 mindestens so groß ist, dass der Lagerkopf 7 zwischen die beiden Anschlageinrichtungen 37 und 48 passt, wie beispielsweise aus Figur 24 ersichtlich ist.

Auf diese Weise liegt der Lagerkopf 7, wurde er um die erste Kippachse 41 aus der Gebrauchsstellung in die zur Seite geschwenkte Zwischenstellung geschwenkt, zwischen den beiden Anschlageinrichtungen 37 und 48, so dass er anschließend um die von der zweiten Anschlageinrichtung 48 gebildete zweite Kippachse 49 kippen kann, die quer zur Achslinie des Drehachsgliedes 21 und somit quer zur ersten Kippachse 41 gerichtet ist.

Der zweiten Anschlageinrichtung 48 ist eine zweite Gegenanschlageinrichtung 50 am Lagerkopf 7 zugeordnet, mit der der Lagerkopf 7, wird er mittels der Antriebseinrichtung 9 bewegt, gegen die zweite Anschlageinrichtung 48 stößt, so dass er um diese kippt. Bei diesem Kippen wird der Kupplungsarm 5 mitgenommen, so dass er in die Nichtgebrauchsstellung gelangt.

Beim Überführen des Kupplungsarms 5 aus der Nichtgebrauchsstellung in die Gebrauchsstellung laufen die Vorgänge umgekehrt ab, d.h. der Lagerkopf 7 wird um die zweite Kippachse 49 nach unten gekippt, so dass er mit seiner Querfläche 40 an der Rückwand 11 des Kupplungsgehäuses 8 anliegt. Die zweite Anschlageinrichtung 48 befindet sich ebenfalls wie die erste Anschlageinrichtung 37 an der Kupplungsgehäuse-Rückwand 11.

Die zweite Gegenanschlageinrichtung 50 kann wieder von einem Passstück-Kantenbereich 51 gebildet werden. Ferner kann es sich bei der zweiten Anschlageinrichtung 48 wiederum um einen Anschlagstift 52 oder Anschlagsteg runden Querschnitts handeln, wobei die zweite Gegenanschlagseinrichtung 50 von einer im Querschnitt entsprechend abgerundeten Gegenanschlagsnut 53 gebildet werden kann.

Bei der zweiten Kippachse 49 ist die Anordnung also der ersten Kippachse 41 entsprechend ausgebildet.

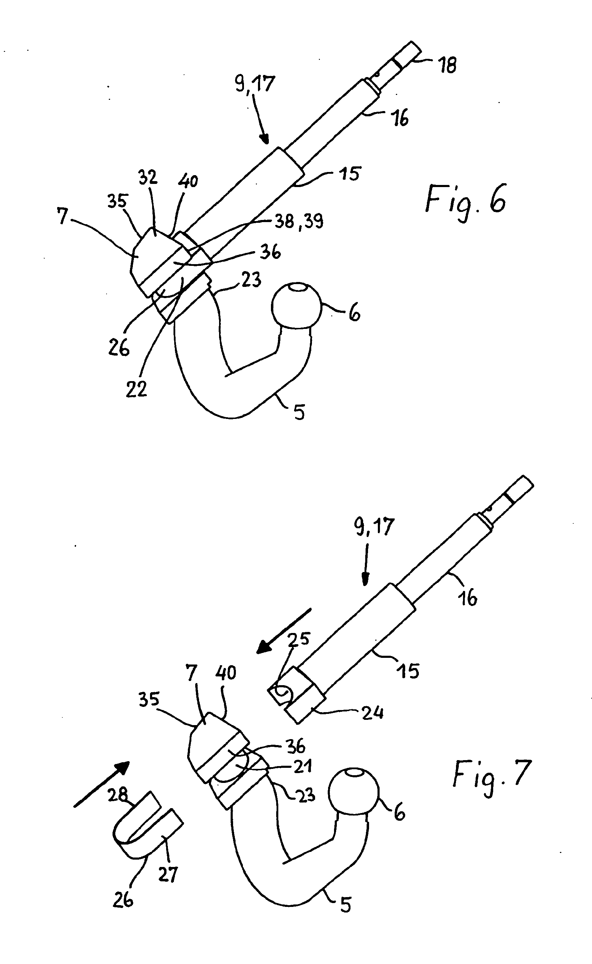

Damit der Lagerkopf 7 um die zweite Kippachse 49 kippen kann, ist die Antriebseinrichtung 9 gelenkig mit dem Drehlager 22 und dabei mit dessen Lagerelement 24 (siehe Figur 7) verbunden. Die gelenkige Verbindung erfolgt mittels einer zur zweiten Kippachse 49 parallelen Gelenkachse 54.

Die Ausführungsform nach den Figuren 20 bis 28 ist insbesondere auch für Geländewagen oder dergleichen Kraftfahrzeuge mit einem verhältnismäßig hoch liegenden Stoßfänger geeignet. Bei solchen Fahrzeugen ist der Kupplungsarm 5 verhältnismäßig lang ausgebildet, so dass er in der Gebrauchsstellung entsprechend weit nach unten hin über den Stoßfänger vorsteht. Dies hängt damit zusammen, dass der Kupplungskopf 6 in der Gebrauchsstellung eine vorgeschriebene Höhenlage einnehmen muss. Aufgrund des Verkippens des Kupplungsarms aus der zur Seite geschwenkten Zwischenstellung in die Nichtgebrauchsstellung ist die Länge des Kupplungsarms ohne Bedeutung. Im hochgekippten Zustand ist er unabhängig von seiner Länge versteckt untergebracht.

Die elektrische Steuerung für den elektrischen Antriebsmotor 20 kann wie folgt arbeiten:

Der Antriebsmotor 20 weist einen Drehimpulsgeber 55 auf, der in Abhängigkeit von Umdrehungen des Antriebsmotors Drehimpulse erzeugt. Dabei sind dem Antriebsmotor 20 Steuermittel 56 zum Steuern des Antriebsmotors 20 in Abhängigkeit von den Drehimpulsen zugeordnet. Da der Steuerung die Zahl der Impulse für den kompletten Verfahrweg bekannt ist (fest einprogrammiert oder bei der ersten Inbetriebnahme am Fahrzeug "eingelernt") ist ihr die jeweils aktuelle Position des Kupplungsarmes 5 bekannt und kann - je nach Drehrichtung des Motors - durch Subtraktion oder Addition beim Verfahren "mitgekoppelt" werden.

Die Gesamt-Drehimpulszahl kann also in den Steuermitteln 56 gespeichert oder speicherbar und insbesondere von den Steuermitteln ermittelbar sein. Dabei können, wie ebenfalls schon angedeutet, die Steuermittel 56 zum Positionieren des Lagerkopfes 7 in Abhängigkeit von den Drehimpulsen ausgestaltet sein, wobei die Steuermittel 56 insbesondere die Drehimpulse von einer dem Bewegungsweg des Lagerkopfes 7 zugeordneten Gesamt-Drehimpulszahl subtrahieren oder addieren.

Hat der Lagerkopf 7 eine Endposition erreicht (was durch den Wegfall der Impulse trotz eingeschalteten Motors erkannt werden kann), wird der Motor noch eine gewisse Zeit (beispielsweise 1 bis 3 Sekunden) eingeschaltet gelassen und dann abgeschaltet. Auf diese Weise wird ohne Drehmomenterkennung und ohne Endschalter die Endposition zuverlässig erkannt. Das Mitzählen der Impulse gewährleistet, dass erkannt wird, ob der Kupplungsarm 5 in der Endposition ist oder durch ein Hindernis (Baum, Zaunpfahl, Extremität der Bedienungsperson usw.) an der Weiterbewegung gehindert ist. Im letzteren Falle würde die Steuerung den Motor kurz in Gegenrichtung bewegen und in einen Störungsmodus übergehen.

Dies lässt sich so zusammenfassen, dass die Steuermittel 56 zum Abschalten des Antriebsmotors 20 in Abhängigkeit von gezählten Drehimpulsen insbesondere nach Erreichen zumindest einer anhand der Drehimpulse ermittelten Endposition des Lagerkopfes 7 ausgestaltet sind. Dabei können die Steuermittel 56 den Antriebsmotor 20 nach Erreichen der mindestens einen Endposition für eine vorbestimmte Zeit eingeschaltet lassen. Außerdem können die Steuermittel 56 zur Kompensation eines unbeabsichtigten Verstellen des Lagerkopfes 7 aus der mindestens einen Endposition zu einem automatischen, in zeitlichen Intervallen wiederholten Ansteuern des Antriebsmotors 20 für eine vorbestimmte Mindest-Einschaltzeitspanne ausgestaltet sein, während der der Antriebsmotor 20 den Lagerkopf 7 in Richtung der mindestens einen Endposition antreibt.

Schließlich ist zweckmäßigerweise noch vorgesehen, dass die Steuermittel 56 den Antriebsmotor 20 zu einer Bewegungsrichtungsumkehr ansteuern, wenn sich der Lagerkopf 7 außerhalb der mindestens einen Endposition befindet und der Impulsgeber 55 bei eingeschaltetem Antriebsmotor während einer vorbestimmten Zeitspanne keine Drehimpulse erzeugt. Dies ist insbesondere dann der Fall, wenn sich dem Kupplungsarm 5, wie bereits erwähnt, ein Hindernis entgegenstellt.

## Patentansprüche

1. Anhängerkupplung für Kraftfahrzeuge, insbesondere Personenkraftwagen, mit einem Kupplungsarm, der einenends einen Kupplungskopf zum lösbaren Befestigen eines Anhängers trägt und andernends mit einem Lagerkopf fest verbunden ist, der ein Drehachsglied aufweist, das in einem Drehlager verdrehbar gelagert ist, wobei der Kupplungsarm mittels einer Antriebseinrichtung zwischen einer im am Fahrzeug montierten Zustand nach hinten gerichteten Gebrauchsstellung und einer zur Seite geschwenkten und mit Bezug auf die Gebrauchsstellung weiter nach oben bewegten Nichtgebrauchsstellung verstellbar ist, wobei die Antriebseinrichtung (9) über das Drehlager (22) am Drehachsglied (21) angreift, und der in einem Kupplungsgehäuse (8) gelagerte und geführte Lagerkopf (7) ein außerhalb des Drehlagers (22) angeordnetes Passstück (29) aufweist, dem eine am Kupplungsgehäuse (8) feststehend angeordnete Passstückaufnahme (10) zugeordnet ist, in die das Passstück (29) in der Gebrauchsstellung mittels der Antriebseinrichtung (9) gedrückt wird, so dass das Passstück (29) unverdrehbar festgespannt ist, und aus der das Passstück (29) mittels der Antriebseinrichtung (9) herausziehbar ist, **dadurch gekennzeichnet dass** im Bewegungsweg des Lagerkopfes (7) eine gehäusefeste Anschlageinrichtung (37) und am Lagerkopf (7) eine Gegenanschlageinrichtung (38) angeordnet ist, derart, dass der Lagerkopf (7) bei seinem Herausziehen und entgegengesetzten Einschieben in die Passstückaufnahme (10) mit seiner Gegenanschlageinrichtung (38) gegen die Anschlageinrichtung (37) stößt und um die in beiden Richtungen eine zur Achslinie des Drehachsgliedes (21) parallele Kippachse (41) bildende Anschlageinrichtung (37) kippt, so dass sich das Drehachsglied (21) im Drehlager (22) verdreht und der Kupplungsarm (5) aus seiner Gebrauchsstellung zur Seite geschwenkt oder umgekehrt von der Seite her in die Gebrauchsstellung geschwenkt wird.

2. Anhängerkupplung nach Anspruch 1, **dadurch gekennzeichnet, dass** sich die Passstückaufnahme (10) in Richtung von der Antriebseinrichtung (9) weg keilartig verjüngt und das Passstück (29) einen sich entsprechend keilartig verjüngenden Keilbereich (32) aufweist, der in der Gebrauchsstellung in der Passstückaufnahme (10) festgekeilt ist.

3. Anhängerkupplung nach Anspruch 2, **dadurch gekennzeichnet, dass** sich die Passstückaufnahme (10) und der Keilbereich (32) des Passstücks (29) in der Richtung der Achslinie des Drehachsgliedes (21) entsprechender Draufsicht eine sich keilartig verjüngende Gestalt aufweisen.

4. Anhängerkupplung nach einem der Ansprüche 1 bis 3, **dadurch gekennzeichnet, dass** das Passstück (29) in zwei beiderseits des Drehachsgliedes (21) angeordnete Passstückpartien (30, 31) unterteilt ist.

5. Anhängerkupplung nach Anspruch 4, **dadurch gekennzeichnet, dass** der Lagerkopf 7 von den beiden Passstückpartien (30, 31) und dem zwischen diesen angeordneten Drehachsglied (21) gebildet wird.

6. Anhängerkupplung nach einem der Ansprüche 1 bis 5, **dadurch gekennzeichnet, dass** das Passstück (29) in radialer Richtung über das Drehachsglied (21) vorsteht.

7. Anhängerkupplung nach einem der Ansprüche 1 bis 6, **dadurch gekennzeichnet, dass** das Kupplungsgehäuse (8) in am Fahrzeug montierten Zustand im Wesentlichen in einer quer zur Fahrtrichtung stehenden Querebene verläuft.

8. Anhängerkupplung nach Anspruch 7, **dadurch gekennzeichnet, dass** das Kupplungsgehäuse (8) in der Querebene geneigt zur Horizontalen verläuft, wobei die Passstückaufnahme (10) am unteren Endbereich des Kupplungsgehäuses (8) angeordnet ist.

9. Anhängerkupplung nach Anspruch 8, **dadurch gekennzeichnet, dass** der Lagerkopf (7) bei zur Seite geschwenktem Kupplungsarm (5) mittels der Antriebseinrichtung (9) längs des Kupplungsgehäuses (8) bewegbar ist, wobei der Lagerkopf (7) und mit diesem der Kupplungsarm (5) in der Nichtgebrauchsstellung nach oben bewegt ist.

10. Anhängerkupplung nach einem der Ansprüche 1 bis 8, **dadurch gekennzeichnet, dass** im Bewegungsweg des Lagerkopfes (7) von der Passstückaufnahme (10) aus gesehen jenseits der den Lagerkopf (7) um eine zur Achslinie des Drehachsgliedes 21 parallele Kippachse (41) kippenden ersten Anschlageinrichtung (37) eine zweite gehäusefeste Anschlageinrichtung (48) angeordnet ist, deren Abstand von der ersten Anschlageinrichtung (37) mindestens so groß ist, dass der Lagerkopf (7) zwischen die beiden Anschlageinrichtungen (37, 48) passt, wobei der zweiten Anschlageinrichtung (48) eine zweite Gegenanschlageinrichtung (50) am Lagerkopf (7) zugeordnet ist, derart, dass die zweite Anschlageinrichtung (48) eine quer zur Achslinie des Drehachsgliedes (21) verlaufende zweite Kippachse (49) bildet, so dass der beim Verschwenken des Kupplungsarms (5) aus der Gebrauchsstellung zur Seite hin um die erste Anschlageinrichtung (37) gekippte Lagerkopf (7) bei weiterem Bewegen mittels der Antriebseinrichtung (9) in Richtung von der Passstückaufnahme (10) weg mit seiner zweiten Gegenanschlageinrichtung (50) an der zweiten Anschlageinrichtung (48) anliegt und unter Mitnahme des Kupplungsarms (5) in die Nichtgebrauchsstellung kippt.

11. Anhängerkupplung nach einem der Ansprüche 1 bis 10, **dadurch gekennzeichnet, dass** die erste Anschlageinrichtung (37) und/oder die zweite Anschlageinrichtung von den beiden Rändern (42, 42a) einer am Gehäuse (8) angeordneten ersten Anschlagausnehmung (43) bzw. zweiten Anschlagausnehmung gebildet wird, in die beim Verkippen die erste Gegenanschlageinrichtung (38) bzw. zweite Gegenanschlageinrichtung eintaucht.

12. Anhängerkupplung nach Anspruch 11, **dadurch gekennzeichnet, dass** die erste Gegenanschlageinrichtung (38) bzw. zweite Gegeizanschlageinrichtung von einem Passstück-Kantenbereich (39) gebildet wird.

13. Anhängerkupplung nach einem der Ansprüche 1 bis 12, **dadurch gekennzeichnet, dass** die erste und/oder die zweite Anschlageinrichtung (37, 48) von einem Anschlagstift (46, 52) oder Anschlagsteg runden Querschnitts und die erste bzw. zweite Gegenanschlageinrichtung (38, 50) von einer im Querschnitt entsprechend abgerundeten Gegenanschlagsnut (47, 53) gebildet wird.

14. Anhängerkupplung nach einem der Ansprüche 1 bis 13, **dadurch gekennzeichnet, dass** die Antriebseinrichtung (9) feststehend oder gelenkig mit dem Drehlager (22) verbunden ist.

15. Anhängerkupplung nach einem der Ansprüche 1 bis 14, **dadurch gekennzeichnet, dass** die Antriebseinrichtung (9) eine lineare Stellantriebseinrichtung ist.

16. Anhängerkupplung nach einem der Ansprüche 1 bis 15, **dadurch gekennzeichnet, dass** die Antriebseinrichtung (9) motorisch angetrieben wird.

17. Anhängerkupplung nach Anspruch 16, **dadurch gekennzeichnet, dass** der elektrische Antriebsmotor (20) einen Drehimpulsgeber (55) aufweist, der in Abhängigkeit von Umdrehungen des Antriebsmotors (20) Drehimpulse erzeugt.

18. Anhängerkupplung nach Anspruch 17, **dadurch gekennzeichnet, dass** dem Antriebsmotor (20) Steuermittel (56) zum Steuern des Antriebsmotors (20) in Abhängigkeit von den Drehimpulsen zugeordnet sind.

19. Anhängerkupplung nach Anspruch 18, **dadurch gekennzeichnet, dass** die Steuermittel (56) zum Abschalten des Antriebsmotors (20) ausgestaltet sind, wenn der Drehimpulsgeber (55) bei eingeschaltetem Antriebsmotor (20) innerhalb einer vorbestimmten Zeitspanne keine Drehimpulse erzeugt.

20. Anhängerkupplung nach Anspruch 18 oder 19, **dadurch gekennzeichnet, dass** die Steuermittel (56) zum Positionieren des Lagerkopfes (7) in Abhängigkeit von den Drehimpulsen ausgestaltet sind, wobei die Steuermittel (56) insbesondere die Drehimpulse von einer dem Bewegungsweg des Lagerkopfes (7) zugeordneten Gesamt-Drehimpulszahl subtrahieren oder addieren.

21. Anhängerkupplung nach Anspruch 20, **dadurch gekennzeichnet, dass** die Gesamt-Drehimpulszahl in den Steuermitteln (56) gespeichert oder speicherbar ist, und insbesondere von den Steuermitteln (56) ermittelbar ist.

22. Anhängerkupplung nach einem der Ansprüche 18 bis 21, **dadurch gekennzeichnet, dass** die Steuermittel (56) zum Abschalten des Antriebsmotors (20) in Abhängigkeit von gezählten Drehimpulsen insbesondere nach Erreichen zumindest einer anhand der Drehimpulse ermittelten Endposition des Lagerkopfes (7) ausgestaltet sind.

23. Anhängerkupplung nach Anspruch 22, **dadurch gekennzeichnet, dass** die Steuermittel (56) den Antriebsmotor (20) nach Erreichen der mindestens einen Endposition für eine vorbestimmte Zeit eingeschaltet lassen.

24. Anhängerkupplung nach Anspruch 22 oder 23, **dadurch gekennzeichnet, dass** die Steuermittel (56) zur Kompensation eines unbeabsichtigten Verstellen des Lagerkopfes (7) aus der mindestens einen Endposition zu einem automatischen, in zeitlichen Intervallen wiederholten Ansteuern des Antriebsmotors (20) für eine vorbestimmte Mindest-Einschaltzeitspanne ausgestaltet sind, während der der Antriebsmotor (20) den Lagerkopf (7) in Richtung der mindestens einen Endposition antreibt.

25. Anhängerkupplung nach einem der Ansprüche 22 bis 24, **dadurch gekennzeichnet, dass** die Steuermittel (56) den Antriebsmotor (20) zu einer Bewegungsrichtungsumkehr ansteuern, wenn sich der Lagerkopf (7) außerhalb der mindestens einen Endposition befindet und der Drehimpulsgeber (55) bei eingeschaltetem Antriebsmotor (20) während einer vorbestimmten Zeitspanne keine Drehimpulse erzeugt.

## Claims

1. Trailer coupling for motor vehicles, in particular cars, with a coupling arm supporting a coupling head for releasably attaching a trailer at one end, while the other end is permanently connected to a bearing head featuring a hinge element rotatably mounted in a rotary bearing, wherein the coupling arm is, by means of a drive unit, adjustable between a position of use, in which it is mounted on the vehicle and oriented in the backward direction, and an inoperative position, in which it is pivoted sideways and moved upwards relative to the position of use, wherein the drive unit (9) acts on the hinge element (21) via the rotary bearing (22), and wherein the bearing head (7) located and guided in a coupling housing (8) incorporates an adapter (29) located outside the rotary bearing (22), to which is assigned an adapter location (10) mounted in a fixed position on the coupling housing (8), into which the adapter (29) is pushed by means of the drive unit (9) in the position of use, so that the adapter (29) is non-rotatably clamped, and from which the adapter (29) can be pulled by means of the drive unit (9), **characterised in that** a stop device (37) located on the housing is arranged in the path of the bearing head (7) and a mating stop device (38) is arranged on the bearing head (7), so that the bearing head (7), when being pulled from and pushed into the adapter location (10), hits the stop device (37) with its mating stop device (38) and tilts relative to the stop device (37), which forms a tilting axis (41) parallel to the axis line of the hinge element (21), so that the hinge element (21) is rotated in the rotary bearing (22) and the coupling arm (5) is pivoted sideways from its position of use or from the side into its position of use.

2. Trailer coupling according to claim 1, **characterised in that** the adapter location (10) tapers away from the drive unit (9) and the adapter (29) has a corresponding tapering section (32), which is securely wedged into the adapter location (10) in the position of use.

3. Trailer coupling according to claim 2, **characterised in that** the adapter location (10) and the tapering section (32) of the adapter (29), in a top view corresponding to the direction of the axis line of the hinge element (21), have a tapering shape.

4. Trailer coupling according to any of claims 1 to 3, **characterised in that** the adapter (29) is divided into two adapter sections (30, 31) located on either side of the hinge element (21).

5. Trailer coupling according to claim 4, **characterised in that** the bearing head (7) is represented by the two adapter sections (30, 31) and the hinge element (21) located between these.

6. Trailer coupling according to any of claims 1 to 5, **characterised in that** the adapter (29) projects beyond the hinge element (21) in the radial direction.

7. Trailer coupling according to any of claims 1 to 6, **characterised in that** the coupling housing (8), when mounted on the vehicle, essentially extends in a transverse plane lying at right angles to the direction of travel.

8. Trailer coupling according to claim 7, **characterised in that** the coupling housing (8) extends at an angle relative to the horizontal in the transverse plane, the adapter location (10) being located at the lower end of the coupling housing (8).

9. Trailer coupling according to claim 8, **characterised in that** the bearing head (7), in the sideways position of the coupling arm (5), can be moved along the coupling housing (8) by means of the drive unit (9), the bearing head (7) together with the coupling arm (5) being moved upwards in the inoperative position.

10. Trailer coupling according to any of claims 1 to 8, **characterised in that** a second stop device (48) mounted on the housing is located in the path of the bearing head (7) beyond, if viewed from the adapter location (10), the first stop device (37) tilting the bearing head (7) about a tilting axis (41) running parallel to the axis line of the hinge element (21), its distance from the first stop device (37) being at least long enough for the bearing head (7) to fit between the two stop devices (37, 48), wherein a second mating stop device (50) on the bearing head (7) is assigned to the second stop device (48), with the result that the second stop device (48) forms a second tilting axis (49) running at right angles to the axis line of the hinge element (21), so that the bearing head (7) tilted about the first stop device (37) while the coupling arm (5) is pivoted sideways bears with its second mating stop device (50) against the second stop device (48) when moved farther away from the adapter location (10) by means of the drive unit (9) and tilts into the inoperative position, carrying along the coupling arm (5).

11. Trailer coupling according to any of claims 1 to 10, **characterised in that** the first stop device (37) and/or the second stop device are/is are represented by the two edges (42, 42a) of a first stop recess (43) and/or a second stop recess located on the housing (8), into which the first mating stop device (38) and/or the second mating stop device dip/s during the tilting process.

12. Trailer coupling according to claim 11, **characterised in that** the first mating stop device (38) or the second mating stop device is represented by an adapter edge area (39).

13. Trailer coupling according to any of claims 1 to 12, **characterised in that** the first and/or the second stop device (37, 48) are/is represented by a stop pin or stop web with a circular cross-section and the first and/or second mating stop device (38, 50) are/is represented by a mating stop groove (47, 53) with a correspondingly rounded cross-section.

14. Trailer coupling according to any of claims 1 to 13, **characterised in that** the drive unit (9) is in fixed or pivotable connection with the rotary bearing (22).

15. Trailer coupling according to any of claims 1 to 14, **characterised in that** the drive unit (9) is a linear actuator.

16. Trailer coupling according to any of claims 1 to 15, **characterised in that** the drive unit (9) is driven by a motor.

17. Trailer coupling according to claim 16, **characterised in that** the electric drive motor (20) includes a rotary encoder (55) generating rotary pulses in dependence on revolutions of the drive motor (20).

18. Trailer coupling according to claim 17, **characterised in that** control means (56) for the control of the drive motor (20) in dependence on the rotary pulses are assigned to the drive motor (20).

19. Trailer coupling according to claim 18, **characterised in that** the control means (56) are designed to disconnect the drive motor (20) if the rotary encoder (55) does not generate any rotary pulses within a preset period of time while the drive motor (20) is switched on.

20. Trailer coupling according to claim 18 or 19, **characterised in that** the control means (56) are designed to position the bearing head (7) in dependence on the rotary pulses, the control means (56) in particular subtracting or adding the rotary pulses from/to a rotary pulse total assigned to the path of the bearing head (7).

21. Trailer coupling according to claim 20, **characterised in that** the rotary pulse total is or can be stored in the control means (56) and can in particular be determined by the control means (56).

22. Trailer coupling according to any of claims 18 to 21, **characterised in that** the control means (56) are designed to disconnect the drive motor (20) in dependence on counted rotary pulses, in particular on reaching at least one end position of the bearing head (7) determined using the rotary pulses.

23. Trailer coupling according to claim 22, **characterised in that** the control means (56) leave the drive motor (20) switched on for a preset period of time on reaching the at least one end position.

24. Trailer coupling according to claim 22 or 23, **characterised in that** the control means (56) are designed to compensate for any inadvertent displacement of the bearing head (7) from the at least one end position by the automatic selection, repeated at intervals, of the drive motor (20) for a preset minimum on-period, during which the drive motor (20) drives the bearing head (7) towards the at least one end position.

25. Trailer coupling according to any of claims 22 to 24, **characterised in that** the control means (56) drive the drive motor (20) to reverse its direction of movement if the bearing head (7) is outside its at least one end position and the rotary encoder (55) does not generate any rotary pulses within a preset period of time while the drive motor (20) is switched on.

## Revendications

1. Attelage de remorque pour véhicule automobile, en particulier pour voiture de tourisme, comportant un bras d'attelage qui porte à une extrémité une tête d'attelage pour la fixation séparable d'une remorque, et qui à l'autre extrémité est solidaire d'une tête de palier qui comporte un organe à axe de rotation, lequel est monté pivotant dans un palier de rotation, le bras d'attelage étant réglable, au moyen d'un dispositif d'entraînement, entre une position d'utilisation dirigée vers l'arrière à l'état monté sur le véhicule, et une position de non-utilisation pivotée vers le côté et déplacée plus loin vers le haut par rapport à la position d'utilisation, le dispositif d'entraînement (9) agissant par l'intermédiaire du palier de rotation (22) sur l'organe à axe de rotation (21), et la tête de palier (7), montée et guidée dans un boîtier d'attelage (8), comportant une pièce d'ajustement (29) disposée à l'extérieur du palier de rotation (22), laquelle est associée à un logement de pièce d'ajustement (10) disposé de manière fixe sur le boîtier d'attelage (8), logement dans lequel la pièce d'ajustement (29) est pressée dans la position d'utilisation au moyen du dispositif d'entraînement (9), de sorte que la pièce d'ajustement (29) soit serrée de façon à ne pas pouvoir tourner, et à l'extérieur duquel la pièce d'adaptation (29) peut être extraite au moyen du dispositif d'entraînement (9), **caractérisé en ce que** dans la trajectoire de déplacement de la tête de palier (7) est disposé un dispositif de butée (37) solidaire du boîtier et sur la tête de palier (7) un dispositif de contre-butée (38), de sorte que la tête de palier (7) vienne heurter, lors de son extraction et de son introduction en sens opposé dans le logement de pièce d'ajustement (10), par son dispositif de contre-butée (38), le dispositif de butée (37), et bascule autour du dispositif de butée (37) formant, dans les deux directions, un axe de basculement (41) parallèle à la ligne de l'axe de l'organe à axe de rotation (21), ce qui fait que l'organe à axe de rotation (21) tourne dans le palier de rotation (22) et que le bras d'attelage (5) est pivoté vers le côté depuis sa position d'utilisation, ou inversement depuis le côté dans la position d'utilisation.

2. Attelage de remorque selon la revendication 1, **caractérisé en ce que** le logement de pièce d'ajustement (10) est rétréci à la manière d'un coin depuis le dispositif d'entraînement (9), et la pièce d'ajustement (29) présente une zone en coin (32) se rétrécissant de même à la manière d'un coin, laquelle zone, en position d'utilisation, est fermement clavetée dans le logement de pièce d'ajustement (10).

3. Attelage de remorque selon la revendication 2, **caractérisé en ce que** le logement de pièce d'ajustement (10) et la zone en coin (32) de la pièce d'ajustement (29) présentent, dans la vue de dessus correspondant à la direction de la ligne de l'axe de l'organe à axe de rotation (21), une fente se rétrécissant à la manière d'un coin.

4. Attelage de remorque selon l'une des revendications 1 à 3, **caractérisé en ce que** la pièce d'ajustement (29) est divisée en deux parties de pièce d'ajustement (30, 31), disposées des deux côtés de l'organe à axe de rotation (21).

5. Attelage de remorque selon la revendication 4, **caractérisé en ce que** la tête de palier (7) est formée par les deux parties de pièce d'ajustement (30, 31) et que l'organe à axe de rotation (21) est disposé entre celles-ci.

6. Attelage de remorque selon l'une des revendications 1 à 5, **caractérisé en ce que** la pièce d'ajustement (29) dépasse dans la direction radiale de l'organe à axe de rotation (21).

7. Attelage de remorque selon l'une des revendications 1 à 6, **caractérisé en ce que** le boîtier d'attelage (8) à l'état monté sur le véhicule, s'étend sensiblement dans un plan transversal perpendiculaire à la direction de marche.

8. Attelage de remorque selon la revendication 7, **caractérisé en ce que** le boîtier d'attelage (8) s'étend dans le plan transversal incliné par rapport à l'horizontale, le logement de pièce d'ajustement (10) étant disposé dans la zone d'extrémité inférieure du boîtier d'attelage (8).

9. Attelage de remorque selon la revendication 8, **caractérisé en ce que** la tête de palier (7) est déplaçable au moyen du dispositif d'entraînement (9), le long du boîtier d'attelage (8), lorsque le bras d'attelage (5) est pivoté vers le côté, la tête de palier (7) et avec celle-ci le bras d'accouplement (5) étant déplacés vers le haut dans la position de non-utilisation.

10. Attelage de remorque selon l'une des revendications 1 à 8, **caractérisé en ce que** dans la trajectoire de déplacement de la tête de palier (7), vu depuis le logement de pièce d'ajustement (10), il est disposé, de l'autre côté du premier dispositif de butée (37), faisant basculer la tête de palier (7) autour d'un axe de basculement (41) parallèle à la ligne de l'axe de l'organe à axe de rotation (21), un deuxième dispositif de butée (48) solidaire du boîtier, dont la distance par rapport au premier dispositif de butée (37) est au moins suffisamment grande pour que la tête de palier (7) s'ajuste entre les deux dispositifs de butée (37, 48), au deuxième dispositif de butée (48) étant associé sur la tête de palier (7) un deuxième dispositif de contre-butée (50), de sorte que le deuxième dispositif de butée (48) forme un deuxième axe de basculement (49), s'étendant transversalement à la ligne de l'axe de l'organe à axe de rotation (21), ce qui fait que la tête de palier (7), basculée vers le côté autour du premier dispositif de butée (37), lors du pivotement du bras d'attelage (5) à l'extérieur de la position d'utilisation, s'applique, par son deuxième dispositif de contre-butée (50), contre le deuxième dispositif de butée (48), lors de la poursuite du déplacement au moyen du dispositif d'entraînement (9), dans la direction opposée au logement de pièce d'ajustement (10), et bascule dans la position de non-utilisation, avec entraînement du bras d'attelage (5).

11. Attelage de remorque selon l'une des revendications 1 à 10, **caractérisé en ce que** le premier dispositif de butée (37) et/ou le deuxième dispositif de butée sont formés par les deux bords (42, 42a) d'un premier évidement de butée (43), disposé sur le boîtier (8), ou d'un deuxième évidement de butée, dans lequel pénètre le premier dispositif de contre-butée (38) ou le deuxième dispositif de contre-butée, lors du basculement.

12. Attelage de remorque selon la revendication 11, **caractérisé en ce que** le premier dispositif de contre-butée (38) ou le deuxième dispositif de contre-butée est formé par une zone (39) des bords de la pièce d'ajustement.

13. Attelage de remorque selon l'une des revendications 1 à 12, **caractérisé en ce que** le premier et/ou le deuxième dispositif de butée (37, 48) sont formés par une tige de butée (46, 52) ou barrette de butée de section ronde et le premier ou le deuxième dispositif de contre-butée (38, 50) est formé par une rainure de contre-butée (47, 53) de section transversale arrondie de la même façon.

14. Attelage de remorque selon l'une des revendications 1 à 13, **caractérisé en ce que** le dispositif d'entraînement (9) est relié au palier de rotation (22), de manière fixe ou articulée.

15. Attelage de remorque selon l'une des revendications 1 à 14, **caractérisé en ce que** le dispositif d'entraînement (9) est un dispositif d'entraînement de réglage linéaire.

16. Attelage de remorque selon l'une des revendications 1 à 15, **caractérisé en ce que** le dispositif d'entraînement (9) est entraîné par un moteur.

17. Attelage de remorque selon la revendication 16, **caractérisé en ce que** le moteur d'entraînement électrique (20) comporte un transmetteur d'impulsions de rotation (55) qui produit des impulsions de rotation en fonction des rotations du moteur d'entraînement (20).

18. Attelage de remorque selon la revendication 17, **caractérisé en ce qu'**au moteur d'entraînement (20) sont associés des moyens de commande (56) pour la commande du moteur d'entraînement (20) en fonction des impulsions de rotation.

19. Attelage de remorque selon la revendication 18, **caractérisé en ce que** les moyens de commande (56) sont conçus pour la coupure du moteur d'entraînement (20), lorsque le transmetteur d'impulsions de rotation (55) ne produit pas d'impulsions de rotation à l'intérieur d'un intervalle de temps prédéterminé, lorsque le moteur d'entraînement (20) est en marche.

20. Attelage de remorque selon la revendication 18 ou 19, **caractérisé en ce que** les moyens de commande (56) pour le positionnement de la tête de palier (7) sont conçus en fonction des impulsions de rotation, les moyens de commande (56) soustrayant ou additionnant en particulier les impulsions de rotation d'un nombre total d'impulsions de rotation affecté à la trajectoire de déplacement de la tête de palier (7).

21. Attelage de remorque selon la revendication 20, **caractérisé en ce que** le nombre total d'impulsions de rotation est mémorisé ou peut être mémorisé dans les moyens de commande (56), et peut en particulier être déterminé par les moyens de commande (56).

22. Attelage de remorque selon l'une des revendications 18 à 21, **caractérisé en ce que** les moyens de commande (56) pour la coupure du moteur d'entraînement (20) sont conçus en fonction d'impulsions de rotation comptées, en particulier après qu'a été atteinte au moins une position de fin de course de la tête de palier (7), déterminée à l'aide des impulsions de rotation.

23. Attelage de remorque selon la revendication 22, **caractérisé en ce que** les moyens de commande (56) laissent en marche le moteur d'entraînement (20) pendant un temps prédéterminé, après qu'a été atteinte l'au moins une position de fin de course.

24. Attelage de remorque selon la revendication 22 ou 23, **caractérisé en ce que** les moyens de commande (56) sont conçus pour compenser un déplacement involontaire de la tête de palier (7), à l'extérieur de l'au moins une position de fin de course, pour une commande automatique, renouvelée à intervalles de temps, du moteur d'entraînement (20), pendant un intervalle de temps minimal de mise en marche prédéterminé, pendant lequel le moteur d'entraînement (20) entraîne la tête de palier (7) en direction de l'au moins une position de fin de course.

25. Attelage de remorque selon l'une des revendications 22 à 24, **caractérisé en ce que** les moyens de commande (56) commandent le moteur d'entraînement (20) pour une inversion du sens de déplacement, lorsque la tête de palier (7) se trouve à l'extérieur de l'au moins une position de fin de course, et le transmetteur d'impulsions de rotation (55) ne produit aucune impulsion de rotation, pendant un laps de temps prédéterminé, lorsque le moteur d'entraînement (20) est en marche.
